# EUROPÄISCHE PATENTSCHRIFT

(11) **EP 2 842 806 B1**
(45) Veröffentlichungstag und Bekanntmachung des Hinweises auf die Patenterteilung: **09.03.2016**
(21) Anmeldenummer: 14183002.6
(22) Anmeldetag: 01.09.2014
(51) Int. Cl.: B60R 5/04

(54) **Gepäckraumbodeneinrichtung für einen Gepäckraum eines Personenkraftwagens**
Luggage compartment base device for a luggage compartment of a passenger car
Dispositif de plancher de compartiment à bagages pour un compartiment à bagages d'un véhicule de tourisme

(30) Priorität: 03.09.2013 DE 102013217567
(43) Veröffentlichungstag der Anmeldung: 04.03.2015
(73) Patentinhaber: Bayerische Motoren Werke Aktiengesellschaft, 80809 München (DE)
(72) Erfinder: Günther, Gerhard, 85229 Markt Indersdorf (DE); Schmitter, Bernhard, 83075 Bad Feilnbach (DE); Wichert, Joerg, 82194 Gröbenzell (DE)

(56) Entgegenhaltungen:
- DE-A1- 19 619 126
- DE-A1- 19 941 714
- DE-A1-102005 030 165

## Beschreibung

Die Erfindung betrifft einen Personenkraftwagen mit einem Gepäckraum und einer Gepäckraumbodeneinrichtung gemäß dem Oberbegriff von Patentanspruch 1.

Eine solche Gepäckraumbodeneinrichtung ist beispielsweise aus dem 3er Touring der Marke BMW bekannt. Die Gepäckraumbodeneinrichtung umfasst wenigstens ein erstes Gepäckraumbodenelement, auf dessen erster Bodenfläche im Gepäckraum zu transportierende Gegenstände anordenbar sind. Darüber hinaus umfasst die Gepäckraumbodeneinrichtung zwei in Fahrzeugquerrichtung beiderseits der ersten Bodenfläche angeordnete Führungsschienen. Mit anderen Worten ist eine erste der Führungsschienen linksseitig der ersten Bodenfläche angeordnet, während die zweite Führungsschiene in Fahrzeugquerrichtung rechtsseitig der Bodenfläche angeordnet ist.

Die Führungsschienen dienen zum Führen und Befestigen wenigstens eines Fixierungselements zum Fixieren der zu transportierenden Gegenstände. Dies bedeutet, dass das Fixierungselement entlang der Führungsschienen relativ zu diesen verschoben werden kann, wobei das Fixierungselement durch die jeweilige Führungsschiene geführt wird. Dadurch kann das Fixierungselement in unterschiedliche Positionen bewegt und in der jeweiligen Position an den Führungsschienen befestigt werden. Das Fixierungselement ist beispielsweise eine Leiste zum Begrenzen von Bewegungen der zu transportierenden Gegenstände, so dass sich die Gegenstände nicht unerwünschterweise im Gepäckraum umherbewegen können. Das Fixierungselement kann auch zum Festklemmen der Gegenstände dienen.

Alternativ oder zusätzlich kann das Fixierungselement ein Verzurrelement sein oder aufweisen, an welchem beispielsweise ein Verzurrband, Spannband oder dergleichen befestigt werden kann. Mittels des Spannbands können die Gegenstände verspannt und somit fixiert werden. Die Führungsschienen werden üblicherweise auch als Verzurrschienen bezeichnet, da mit ihrer Hilfe Transportgut im Gepäckraum fixiert werden kann. Mittels des Verzurrbands können dann die zu transportierenden Gegenstände im Gepäckraum fixiert werden. Dadurch, dass das Fixierungselement entlang der Führungsschienen verschoben und an diesen befestigt werden kann, kann das Fixierungselement hinsichtlich seiner Position im Gepäckraum an zu transportierende Gegenstände mit unterschiedlichen Formen und Außenabmessungen angepasst werden.

Des Weiteren umfasst die Gepäckraumbodeneinrichtung ein zweites Gepäckraumbodenelement, welches in Fahrzeuglängsrichtung hinter dem ersten Gepäckraumbodenelement angeordnet ist. Das zweite Gepäckraumbodenelement weist eine zweite Bodenfläche auf, auf der die zu transportierenden Gegenstände anordenbar sind. Dabei ist das zweite Gepäckraumbodenelement zwischen einer Schließstellung und wenigstens einer Offenstellung bewegbar. Dabei schließt sich das zweite Gepäckraumbodenelement bezogen auf die Schließstellung in Fahrzeuglängsrichtung nach hinten hin an das erste Gepäckraumbodenelement an.

In der Schließstellung ist durch das zweite Gepäckraumbodenelement zumindest ein Teilbereich eines bezogen auf die Schließstellung unter dem zweiten Gepäckraumbodenelement angeordneten Stauraums überdeckt. In der Offenstellung ist der Teilbereich freigegeben.

Die DE 10 2005 061 493 B4 offenbart eine Gepäckhalteeinrichtung für ein Kraftfahrzeug, mit einer Verspannungsbefestigungseinrichtung und einer Führungsschiene. Die Verspannungsbefestigungseinrichtung weist einen einenends eine Verbreiterung aufweisenden Rastbolzen auf, wobei der Rastbolzen mit seiner Verbreiterung in Längsachsenrichtung der Führungsschiene verschiebbar, in der Führungsschiene geführt und verrastbar ist. An der Verspannungsbefestigungseinrichtung ist ein Betätigungsknopf vorgesehen, wobei durch Drücken des Betätigungsknopfes die Verbreiterung des Rastbolzens in der Führungsschiene zum Verschieben der Verspannungsbefestigungseinrichtung von einer Verrastungsposition in eine Entrastungsposition entrastbar ist.

Ferner ist es vorgesehen, dass die Verspannungsbefestigungseinrichtung eine Bolzeneinrastaufnahme für einen Gepäcksicherungsbolzen aufweist, wobei in die Bolzeneinrastaufnahme zur Verrastung des Gepäcksicherungsbolzens ein Sicherungsschieber einragt. Der Sicherungsschieber ist durch Drücken des Betätigungsknopfes derart in der Verspannungsbefestigungseinrichtung verschiebbar, dass ein in der Bolzeneinrastaufnahme verrasteter Gepäcksicherungsbolzen entrastbar ist.

Aus der DE 10 2005 030 165 A1, die einen Personenkraftwagen nach dem Oberbegriff des Anspruchs 1 offenbart, ist eine Befestigungsvorrichtung zur Halterung und/oder Sicherung von Gegenständen in einem Gepäckraum eines Kraftfahrzeugs bekannt, mit wenigstens einer Führungsschiene, in die ein Befestigungselement einsetzbar ist. Das Befestigungselement ist in der Führungsschiene verschieblich gelagert und kann durch Betätigung eines Aufsatzteils auf dem Befestigungselement in der Führungsschiene geklemmt werden.

Aufgabe der vorliegenden Erfindung ist es, eine Gepäckraumbodeneinrichtung der eingangs genannten Art derart weiterzuentwickeln, dass das Fixierungselement in seiner Position im Gepäckraum besonders flexibel an unterschiedliche zu transportierende Gegenstände anpassbar ist.

Diese Aufgabe wird durch einen Personenkraftwagen mit einem Gepäckraum und einer Gepäckraumbodeneinrichtung mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Um eine Gepäckraumbodeneinrichtung der im Oberbegriff des Patentanspruchs 1 angegebenen Art derart weiterzuentwickeln, dass das Fixierungselement hinsichtlich seiner Position im Gepäckraum besonders flexibel an zu transportierende Gegenständen mit unterschiedlichen Formen und/oder Außenabmessungen anpassbar ist, ist es erfindungsgemäß vorgesehen, dass mit dem zweiten Gepäckraumbodenelement zwei weitere mit dem zweiten Gepäckraumbodenelement mitbewegbare und bezogen auf die Schließstellung in Fahrzeugquerrichtung beiderseits der zweiten Bodenfläche angeordnete Führungsschienen zum Führen und Befestigen des Fixierungselements verbunden sind. Mit anderen Worten ist bezogen auf die Schließstellung in Fahrzeugquerrichtung linksseitig des zweiten Gepäckraumbodenelements eine dritte Führungsschiene und rechtsseitig des zweiten Gepäckraumbodenelements eine vierte Führungsschiene angeordnet, wobei die weiteren Führungsschienen (dritte und vierte Führungsschiene) mit dem Gepäckraumbodenelement mitbewegbar sind.

Die weiteren Führungsschienen schließen sich dabei bezogen auf die Schließstellung in Längserstreckungsrichtung der ersten Führungsschienen an diese an. Dies bedeutet, dass das Fixierungselement auch entlang der weiteren Führungsschienen in unterschiedliche Positionen relativ zum zweiten Gepäckraumbodenelement verschoben und in den jeweiligen Positionen an den weiteren Führungsschienen und somit am weiteren Gepäckraumbodenelement fixiert werden kann. Dadurch kann das Fixierungselement über eine besonders große Strecke, nämlich sowohl entlang der ersten Führungsschienen als auch entlang der weiteren Führungsschienen verschoben und so besonders bedarfsgerecht an unterschiedliche zu transportierende Gegenstände angepasst werden. In der Folge ist es möglich, sowohl Gegenstände mit geringen Außenabmessungen als auch Gegenstände mit demgegenüber sehr großen Außenabmessungen mittels des Fixierungselements und der Führungsschienen im Gepäckraum fixieren und sicher transportieren zu können.

Zum Führen des Fixierungselements weisen die ersten Führungsschienen sowie die zweiten Führungsschienen beispielsweise jeweilige Führungskanäle auf, wobei das Fixierüngselement zumindest teilweise in den Führungskanälen anordenbar und entlang der Führungskanäle durch diese geführt relativ zu den Führungsschienen verschiebbar ist. Um eine besonders einfache Positionierung des Fixierungselements zu ermöglichen, schließen sich dabei die Führungskanäle der weiteren Führungsschienen in Längserstreckungsrichtung der ersten Führungsschienen an die Führungskanäle der ersten Führungsschienen an. Mit anderen Worten gehen die Führungskanäle der ersten Führungsschienen in die Führungskanäle der weiteren Führungsschienen über. Dies bedeutet, dass die Führungskanäle der ersten Führungsschienen mit den Führungskanälen der zweiten Führungsschienen in der Schließstellung korrespondieren.

Zur Realisierung einer besonders einfachen Handhabung der Gepäckraumbodeneinrichtung ist es bei einer Ausführungsform der Erfindung vorgesehen, dass das zweite Gepäckraumbodenelement zumindest mittelbar am Aufbau des Personenkraftwagens zwischen der Schließstellung und der Offenstellung relativ zum Aufbau verschwenkbar gehalten ist. Somit kann das zweite Gepäckraumbodenelement am Aufbau verbleiben und muss nicht vom Aufbau gelöst werden, um den Stauraum freizugeben und zu diesem zu gelangen. Bei dem Aufbau handelt es sich beispielsweise um die Karosserie des Personenkraftwagens.

In weiterer besonders vorteilhafter Ausgestaltung der Erfindung sind die ersten Führungsschienen am Aufbau des Personenkraftwagens festgelegt. Dadurch ist eine besonders stabile Befestigung der zu transportierenden Gegenstände über die ersten Führungsschienen am Aufbau gewährleistet.

Eine weitere Ausführungsform zeichnet sich dadurch aus, dass das zweite Gepäckraumbodenelement über wenigstens ein Scharnier an zumindest einer der ersten Führungsschienen und über diese am Aufbau zwischen der Schließstellung und der Offenstellung relativ zum Aufbau verschwenkbar gehalten ist. Hierdurch ist eine besonders einfache Fertigung und Montage der Gepäckraumbodeneinrichtung realisierbar. Insbesondere ist es so möglich, die Gepäckraumbodeneinrichtung als Modulbauteil vorzumontieren und in vormontiertem Zustand am Aufbau des Personenkraftwagens zu montieren beziehungsweise zu befestigen.

Bei einer weiteren vorteilhaften Ausführungsform der Erfindung ist mit dem zweiten Gepäckraumbodenelement eine Verriegelungseinrichtung mit wenigstens einem Verriegelungselement verbunden. Das Verriegelungselement ist dabei relativ zum zweiten Gepäckraumbodenelement zwischen einer das zweite Gepäckraumbodenelement in der Schließstellung haltenden Verriegelungsstellung und wenigstens einer das zweite Gepäckraumbodenelement freigebenden Freigabestellung bewegbar. Dadurch kann in der Schließstellung und in der Verriegelungsstellung eine unerwünschte Bewegung des zweiten Gepäckraumbodenelements aus seiner Schließstellung in die Offenstellung vermieden werden. Um das zweite Gepäckraumbodenelement aus der Schließstellung in die Offenstellung zu bewegen, wird das Verriegelungselement auf einfache Weise aus seiner Verriegelungsstellung in seine Freigabestellung verstellt. Hierdurch ist eine bedarfsgerechte und sichere Handhabung der Gepäckraumbodeneinrichtung realisierbar.

Als besonders vorteilhaft hat es sich gezeigt, wenn das Verriegelungselement in der Verriegelungsstellung und in der Schließstellung des zweiten Gepäckraumbodenelements mit einem korrespondierenden, am Aufbau des Personenkraftwagens festgelegten Halteelement zum Halten des zweiten Gepäckraumbodenelements in der Schließstellung zusammenwirkt. Hierdurch ist eine besonders stabile und somit sichere Halterung des zweiten Gepäckraumbodenelements in der Schließstellung realisierbar.

In weiterer Ausgestaltung der Erfindung ist am zweiten Gepäckraumbodenelement ein vom Verriegelungselement beabstandet angeordnetes Griffelement zum Bewegen des Verriegelungselements aus der Verriegelungsstellung in die Freigabestellung vorgesehen. Das Griffelement ist dabei über eine Kopplungseinrichtung mit dem Verriegelungselement gekoppelt. Hierdurch kann das Verriegelungselement auf besonders einfache und komfortable Weise über das Griffelement bewegt werden. Das Griffelement kann dabei an einer vorteilhaften und für eine Person einfach zugänglichen Stelle angeordnet sein. Dadurch kann eine direkte und gegebenenfalls umständliche Betätigung des Verriegelungselements vermieden werden.

Schließlich hat es sich als besonders vorteilhaft gezeigt, wenn am zweiten Gepäckraumbodenelement wenigstens ein Federelement vorgesehen ist, mittels welchem das Verriegelungselement unter Federkraftbeaufschlagung in die Verriegelungsstellung bewegbar und dort zu halten. Eine gewünschte Bewegung des Verriegelungselements aus der Verriegelungsstellung in die Freigabestellung erfolgt entgegen der durch das Federelement bewirkten und auf das Verriegelungselement zumindest mittelbar wirkenden Federkraftbeaufschlagung. Da das Verriegelungselement mittels des Federelements unter Federkraftbeaufschlagung und somit automatisch aus der Freigabestellung in die Schließstellung bewegt werden kann, kann das zweite Gepäckraumbodenelement sicher in der Schließstellung gehalten werden. Ein Zutun der Person, um das zweite Gepäckraumbodenelement zu verriegeln, ist nicht erforderlich.

Nutzer des Personenkraftwagens können dessen Gepäckraum besonders flexibel nutzen und unterschiedliche Gegenstände sicher transportieren, da das Fixierungselement über eine besonders große Strecke, das heißt in einem großen Bereich verschoben und somit an unterschiedliche Außenabmessungen angepasst werden kann. Somit können vielerlei unterschiedliche Gegenstände sicher im Gepäckraum fixiert werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Die Zeichnung zeigt in:

- Fig. 1: eine schematische und perspektivische Draufsicht einer Gepäckraumbodeneinrichtung gemäß einer ersten Ausführungsform für einen Personenkraftwagen, mit zwei in Fahrzeuglängsrichtung hintereinander angeordneten Gepäckraumbodenelementen, wobei in Fahrzeugquerrichtung beiderseits der Gepäckraumbodenelemente Führungsschienen angeordnet sind, entlang denen wenigstens ein Fixierungselement zum Fixieren von zu transportierenden Gegenständen verschiebbar und an denen das Fixierungselement befestigbar ist;
- Fig. 2: ausschnittsweise eine weitere schematische Perspektivansicht der Gepäckraumbodeneinrichtung;
- Fig. 3: ausschnittsweise eine schematische und perspektivische Unteransicht der Gepäckraumbodeneinrichtung;
- Fig. 4: ausschnittsweise eine schematische und geschnittene Seitenansicht der Gepäckraumbodeneinrichtung;
- Fig. 5: eine schematische Perspektivansicht einer Verriegelungseinrichtung der Gepäckraumbodeneinrichtung;
- Fig. 6: ausschnittsweise eine weitere schematische und perspektivische Draufsicht der Gepäckraumbodeneinrichtung;
- Fig. 7: ausschnittsweise eine weitere schematische und perspektivische Ansicht der Gepäckraumbodeneinrichtung;
- Fig. 8: ausschnittsweise eine schematische und perspektivische Draufsicht der Gepäckraumbodeneinrichtung gemäß einer zweiten Ausführungsform;
- Fig. 9: ausschnittsweise eine weitere schematische und perspektivische Draufsicht der Gepäckraumbodeneinrichtung gemäß der zweiten Ausführungsform;
- Fig. 10: ausschnittsweise eine weitere schematische und perspektivische Draufsicht der Gepäckraumbodeneinrichtung gemäß der zweiten Ausführungsform;
- Fig. 11: ausschnittsweise eine weitere schematische und perspektivische Draufsicht der Gepäckraumbodeneinrichtung gemäß der zweiten Ausführungsform;
- Fig. 12: ausschnittsweise eine schematische Schnittansicht der Gepäckraumbodeneinrichtung gemäß der zweiten Ausführungsform; und
- Fig. 13: ausschnittsweise eine schematische und perspektivische Draufsicht der Gepäckraumbodeneinrichtung gemäß der zweiten Ausführungsform und deren Verriegelungseinrichtung.

In den Figuren sind gleiche oder funktionsgleiche Elemente mit gleichen Bezugszeichen versehen.

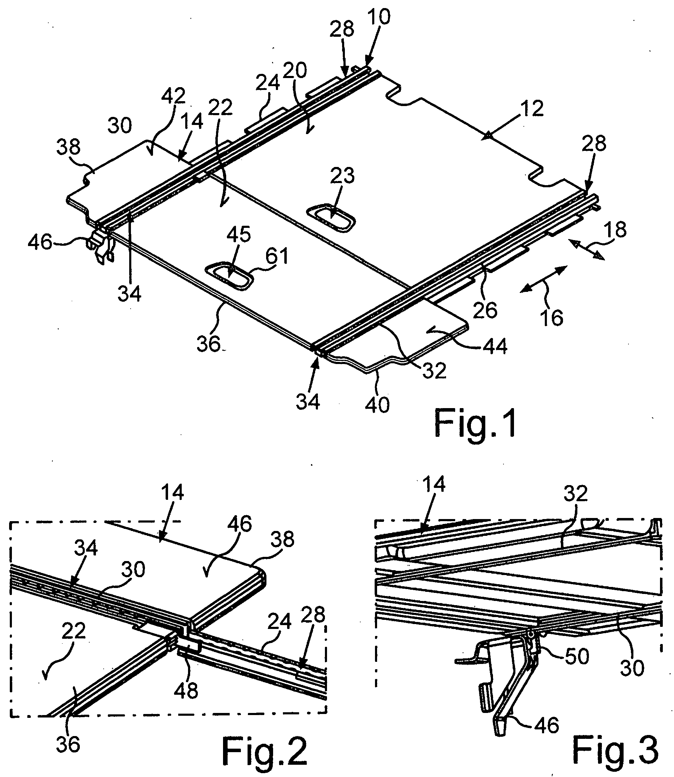

Fig. 1 zeigt eine Gepäckraumbodeneinrichtung 10 gemäß einer ersten Ausführungsform für einen Gepäckraum eines Personenkraftwagens. Die Gepäckraumbodeneinrichtung 10 kann besonders vorteilhaft in einem Kombinationskraftwagen verwendet werden. Die Gepäckraumbodeneinrichtung 10 umfasst ein erstes Gepäckraumbodenelement 12 und ein separat vom ersten Gepäckraumbodenelement 12 ausgebildetes zweites Gepäckraumbodenelement 14. Bezogen auf eine Einbaulage der Gepäckraumbodeneinrichtung 10, in welcher die Gepäckraumbodeneinrichtung 10 am Personenkraftwagen montiert beziehungsweise angeordnet ist, ist das zweite Gepäckraumbodenelement 14 in Fahrzeuglängsrichtung hinter dem ersten Gepäckraumbodenelement 12 angeordnet. Mit anderen Worten schließt sich das zweite Gepäckraumbodenelement 14 in Fahrzeuglängsrichtung nach hinten an das erste Gepäckraumbodenelement 12 an. Die Fahrzeuglängsrichtung ist dabei in Fig. 1 durch einen Richtungspfeil 16 veranschaulicht, während die Fahrzeugquerrichtung durch einen Richtungspfeil 18 veranschaulicht ist.

Das erste Gepäckraumbodenelement 12 weist eine erste Bodenfläche 20 auf, wobei das zweite Gepäckraumbodenelement 14 eine zweite Bodenfläche 22 aufweist. Die Bodenflächen 20, 22 weisen bezogen auf die Einbaulage in Fahrzeughochrichtung nach oben. Steht der Personenkraftwagen beispielsweise auf einer zumindest im Wesentlichen horizontalen Ebene, so sind auch die Bodenflächen 20, 22 zumindest im Wesentlichen horizontal angeordnet beziehungsweise erstrecken sich in einer gedachten horizontalen Ebene. Auf den Bodenflächen 20, 22 können im Gepäckraum zu transportierende Gegenstände, das heißt Transportgut, angeordnet beziehungsweise abgestellt werden.

Das erste Gepäckraumbodenelement 12 ist vorzugsweise reversibel lösbar im Gepäckraum angeordnet. Dies bedeutet, dass das erste Gepäckraumbodenelement 12 in der Einbaulage zerstörungsfrei lösbar am Aufbau, das heißt an der Karosserie des Personenkraftwagens angeordnet ist und von der Karosserie gelöst und somit aus dem Gepäckraum entnommen werden kann. Das erste Gepäckraumbodenelement 12 ist beispielsweise in der Einbaulage einfach auf karosserie- beziehungsweise aufbaufeste Anschläge aufgelegt und in Fahrzeugquerrichtung, in Fahrzeughochrichtung nach unten sowie in Fahrzeuglängsrichtung formschlüssig in der Einbaulage gehalten.

In der Einbaulage ist beispielsweise ein in Fahrzeughochrichtung unter dem ersten Gepäckraumbodenelement 12 angeordneter erster Stauraum des Personenkraftwagens in Fahrzeughochrichtung nach oben hin zumindest teilweise und vorliegend zumindest überwiegend durch das erste Gepäckraumbodenelement 12 überdeckt. Der erste Stauraum ist beispielsweise durch eine Mulde gebildet, in welcher Gegenstände wie beispielsweise Bordwerkzeug, ein Ersatzrad, ein Reifenreparaturset und/oder eine Bordnetzbatterie des Personenkraftwagens angeordnet sind.

Um das erste Gepäckraumbodenelement 12 besonders einfach aus dem Gepäckraum entnehmen und in diesem anordnen zu können, weist das erste Gepäckraumbodenelement 12 ein Griffelement 23 auf. Eine Person, beispielsweise der Fahrer des Personenkraftwagens, kann das Griffelement 23 greifen und dadurch das erste Gepäckraumbodenelement 12 bewegen.

Die Gepäckraumbodeneinrichtung 10 umfasst darüber hinaus zwei erste Führungsschienen 24, 26, welche in Fahrzeugquerrichtung beiderseits der ersten Bodenfläche 20 angeordnet sind. Dies bedeutet, dass die Führungsschiene 24 bezogen auf die Vorwärtsfahrtrichtung des Personenkraftwagens linksseitig, das heißt auf der linken Seite der ersten Bodenfläche 20 angeordnet ist, während - bezogen auf die Einbaulage - die Führungsschiene 26 rechtsseitig, das heißt auf der rechten Seite der ersten Bodenfläche 20, angeordnet ist. Die ersten Führungsschienen 24, 26 sind dabei karosseriefest. Dies bedeutet, dass die ersten Führungsschienen 24, 26 an der Karosserie befestigt und nicht mit dem ersten Gepäckraumbodenelement 12 mitbewegbar sind. Die Führungsschienen 24, 26 sind beispielsweise mit der Karosserie beziehungsweise mit dem Rohbau verschraubt.

Die ersten Führungsschienen 24, 26 dienen zum Führen und Befestigen wenigstens eines Fixierungselements im Gepäckraum. Das Fixierungselement wiederum dient zum Fixieren des Transportguts im Gepäckraum. Bei dem Fixierungselement handelt es sich beispielsweise um ein Verzurrelement, an welchem ein Spannband zum Fixieren des Transportguts verzurrt werden kann. Bei dem Fixierungselement kann es sich alternativ um eine Fixierungsleiste handeln, an das sich das im Gepäckraum angeordnete Transportgut abstützen und somit gegen unerwünschte Bewegungen gesichert werden kann.

Die Führungsschienen 24, 26 weisen jeweils einen Führungskanal 28 auf, in welchem das Fixierungselement zumindest teilweise anordenbar ist. Im zumindest teilweise in dem jeweiligen Führungskanal 28 angeordneten Zustand kann das Fixierungselement entlang der Führungsschienen 24, 26, das heißt in deren Längserstreckungsrichtung und somit in Fahrzeuglängsrichtung relativ zu den Führungsschienen 24, 26 verschoben werden, wobei es durch die Führungsschienen 24, 26 geführt wird. Dadurch ist das Fixierungselement in unterschiedliche Positionen in Fahrzeuglängsrichtung bewegbar und in der jeweiligen Position an den Führungsschienen 24, 26 befestigbar. Durch diese Möglichkeit, das Fixierungselement in unterschiedliche Positionen zu bewegen, kann das Fixierungselement hinsichtlich seiner Position an unterschiedliche zu transportierende Gegenstände, das heißt an unterschiedliche Formen und/oder Außenabmessungen der Gegenstände angepasst werden, so dass beispielsweise sowohl Gegenstände mit geringen Außenabmessungen als auch Gegenstände mit demgegenüber sehr großen Abmessungen im Gepäckraum fixiert werden können.

Das zweite Gepäckraumbodenelement 14 ist zwischen einer Schließstellung und wenigstens einer Offenstellung - bezogen auf die Einbaulage der Gepäckraumbodeneinrichtung 10 - relativ zur Karosserie bewegbar. Vorliegend ist das zweite Gepäckraumbodenelement 14 zwischen der Schließstellung und der Offenstellung um eine in Fahrzeugquerrichtung verlaufende Schwenkachse verschwenkbar.

In der Schließstellung ist ein zweiter Stauraum, welche bezogen auf die Einbaulage und bezogen auf die Schließstellung in Fahrzeughochrichtung unterhalb des zweiten Gepäckraumbodenelements 14 angeordnet ist, zumindest in einem Teilbereich und vorliegend zumindest überwiegend in Fahrzeughochrichtung nach oben hin durch das zweite Gepäckraumbodenelement 14 überdeckt. In der Offenstellung ist der Teilbereich beziehungsweise der zweite Stauraum zumindest teilweise freigegeben, so dass in dem Stauraum ein Abdeck- sowie ein Trennnetzrollo und/oder im Bedarfsfall kleine Gegenstände verstaut werden können.

Wie aus Fig. 1 erkennbar ist, umfasst die Gepäckraumbodeneinrichtung 10 zwei weitere Führungsschienen 30, 32. Die weiteren Führungsschienen 30, 32 sind mit dem zweiten Gepäckraumbodenelement 14 verbunden und somit mit dem zweiten Gepäckraumbodenelement 14 mitbewegbar. Darüber hinaus sind die zweiten Führungsschienen 30, 32 in Fahrzeugquerrichtung beiderseits der zweiten Bodenfläche 22 angeordnet. Dies bedeutet, dass die Führungsschiene 30 bezogen auf die Vorwärtsfahrtrichtung und bezogen auf die Einbaulage linksseitig der zweiten Bodenfläche 22 angeordnet ist, während die Führungsschiene 32 rechtsseitig der zweiten Bodenfläche 22 angeordnet ist.

Bezogen auf die in Fig. 1 gezeigte Schließstellung schließt sich dabei die Führungsschiene 30 in Längserstreckungsrichtung der Führungsschiene 24 an die Führungsschiene 24 an, wobei sich die Führungsschiene 32 in Längserstreckungsrichtung der Führungsschiene 26 an die Führungsschiene 26 anschließt. Die jeweilige Längserstreckungsrichtung der Führungsschienen 24, 26 fällt dabei mit der Fahrzeuglängsrichtung zusammen, so dass sich die Führungsschienen 30, 32 in Längserstreckungsrichtung beziehungsweise in Fahrzeuglängsrichtung nach hinten hin an die jeweiligen Führungsschienen 24, 26 anschließen. Dies bedeutet, dass die Führungsschienen 30, 32 in der Schließstellung des zweiten Gepäckraumbodenelements 14 mit den Führungsschienen 24, 26 korrespondieren. Ein Überschieben des Fixierungselements von der jeweiligen ersten Führungsschiene 24, 26 zur entsprechend korrespondierenden zweiten Führungsschiene 30, 32 ist durch wenigstens einen Anschlag verhindert. Dieser Anschlag ist im Übergangs- beziehungsweise Schnittstellenbereich zwischen den Führungsschienen 24, 26 zu den Führungsschienen 30, 32 angeordnet. Das Fixierungselement kann über wenigstens eine Aussparung in die jeweilige zweite Führungsschiene 30, 32 eingeführt werden.

Auch die zweiten Führungsschienen 30, 32 dienen zum Führen und Befestigen des Fixierungselements, so dass das Fixierungselement über eine besonders große Strecke in Fahrzeuglängsrichtung im Gepäckraum verschoben und entsprechend bedarfsgerecht beziehungsweise flexibel positioniert werden kann.

Zum Führen und Befestigen des Fixierungselements weisen auch die zweiten Führungsschienen 30, 32 jeweils einen Führungskanal 34 auf. Die Führungskanäle 34 korrespondieren dabei in der Schließstellung mit den jeweiligen Führungskanälen 28, so dass die Führungskanäle 28 in Fahrzeuglängsrichtung nach hinten hin in die Führungskanäle 34 übergehen. Auch die Führungskanäle 34 dienen zum zumindest teilweisen Aufnehmen des Fixierungselements.

Durch diese Integration der zweiten Führungsschienen 30, 32 in das zweite Gepäckraumbodenelement 14 weisen die Führungsschienen 24, 30 beziehungsweise 26, 32 insgesamt eine besonders große Erstreckung in Fahrzeuglängsrichtung auf, so dass das Fixierungselement besonders bedarfsgerecht positioniert werden kann. Hierdurch ist eine besonders vorteilhafte Funktionalität des Gepäckraums bei geteiltem Gepäckraumboden geschaffen. Gleichzeitig ist ein besonders einfacher Aufbau realisiert, so dass die Gepäckraumbodeneinrichtung 10 besonders kostengünstig gefertigt werden kann.

Wie aus Fig. 1 erkennbar ist, ist die Bodenfläche 22 durch ein erstes Bodenteil 36 des zweiten Gepäckraumbodenelements 14 gebildet. Das zweite Gepäckraumbodenelement 14 umfasst zweite Bodenteile 38, 40, durch welche weitere, seitliche Bodenflächen 42, 44 gebildet sind. Das Bodenteil 38 beziehungsweise die Bodenfläche 42 ist dabei in Fahrzeugquerrichtung linksseitig der Führungsschienen 30 angeordnet. Mit anderen Worten schließt sich das Bodenteil 38 beziehungsweise die Bodenfläche 42 in Fahrzeugquerrichtung nach links an die Führungsschiene 30 an. Das Bodenteil 40 beziehungsweise die Bodenfläche 44 ist in Fahrzeugquerrichtung rechtsseitig der Führungsschiene 32 angeordnet. Mit anderen Worten schließt sich das Bodenteil 40 beziehungsweise die Bodenfläche 44 in Fahrzeugquerrichtung nach links an die Führungsschiene 32 an. Hierdurch stellt das zweite Gepäckraumbodenelement 14 eine besonders breite Transportfläche bereit, auf welcher Transportgut angeordnet werden kann. Die Bodenteile 38, 40 sind dabei mit dem Bodenteil 36 und den Führungsschienen 30, 32 mit bewegbar und können somit ebenfalls zwischen der Schließstellung und der Offenstellung um die Schwenkachse verschwenkt werden.

Das Gepäckraumbodenelement 14 weist ein Griffelement 45 auf, mittels welchem das zweite Gepäckraumbodenelement 14 auf besonders einfache und komfortable Weise zwischen der Schließstellung und der Offenstellung bewegt werden kann.

Aus Fig. 1 ist ein Halteelement 46 erkennbar, welches an der Karosserie beziehungsweise am Rohbau befestigt ist und welches zum Halten des zweiten Gepäckraumbodenelements 14 in der Schließstellung dient. Wie aus Fig. 1 erkennbar ist, ist das Halteelement 46 auf der linken Seite des Bodenteils 36 angeordnet. Zudem ist ein auf der rechten Seite des Bodenteils 36 angeordnetes Halteelement vorgesehen, welches in Fig. 1 der Übersichtlichkeit wegen nicht dargestellt ist und die gleiche Funktion aufweist wie das linksseitige Halteelement 46. Am Halteelement 46 kann das zweite Gepäckraumbodenelement 14 verrastet werden, um dadurch unerwünschte Bewegungen des zweiten Gepäckraumbodenelements 14 aus der Schließstellung in die Offenstellung zu vermeiden.

Aus Fig. 2 ist die Halterung des zweiten Gepäckraumbodenelements 14 an der Karosserie erkennbar. Das zweite Gepäckraumbodenelement 14 ist dabei zumindest mittelbar an der Karosserie des Personenkraftwagens zwischen der Schließstellung und der Offenstellung relativ zur Karosserie verschwenkbar gehalten. Zur Halterung sind Scharniere vorgesehen, von denen in Fig. 2 das linksseitige, mit der Führungsschiene 24 korrespondierende Scharnier 48 erkennbar ist. Ein mit der Führungsschiene 26 korrespondierendes Scharnier ist in Fig. 2 nicht erkennbar, weist jedoch die gleiche Funktion wie das Scharnier 48 auf.

Das Scharnier 48 ist auf Seiten des zweiten Gepäckraumbodenelements 14 an diesem festgelegt. Auf Seiten der Führungsschiene 24 ist das Scharnier 48 an dieser befestigt, beispielsweise mit dieser verschraubt. Dadurch ist das zweite Gepäckraumbodenelement 14 über die Scharniere (Scharnier 48) an den Führungsschienen 24, 26 und über diese an der Karosserie befestigt. Mittels der Scharniere kann das zweite Gepäckraumbodenelement 14 relativ zu den Führungsschienen 24, 26 zwischen der Schließstellung und der Offenstellung geklappt werden.

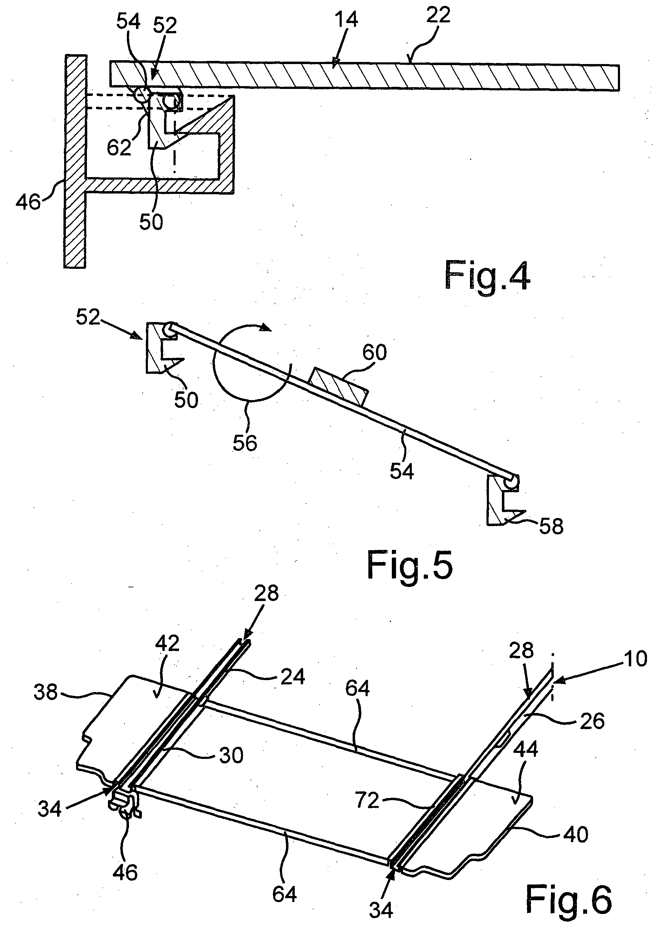

Aus Fig. 3 ist die Arretierung des zweiten Gepäckraumbodenelements 14 in der Schließstellung erkennbar. An der Führungsschiene 30 ist ein Verriegelungselement in Form eines Rasthakens 50 zwischen einer Verriegelungsstellung und wenigstens einer Freigabestellung relativ zur Führungsschiene 30 bewegbar gehalten. Auch an der Führungsschiene 30 ist ein entsprechender Rasthaken (Verriegelungselement) angeordnet, welcher jedoch in Fig. 3 nicht erkennbar ist. In der Verriegelungsstellung wirkt der Rasthaken 50 formschlüssig mit dem Halteelement 46 zusammen. Der Rasthaken 50 ist dabei Bestandteil einer im Ganzen mit 52 bezeichneten und aus Fig. 5 erkennbaren Verriegelungseinrichtung, welche mit dem zweiten Gepäckraumbodenelement 14 verbunden ist.

Der gemäß Fig. 3 geschilderte Aufbau kann auch invers sein, so dass beispielsweise an der Karosserie ein zwischen einer Verriegelungsstellung und einer Freigabestellung bewegbares Verriegelungselement gehalten ist, während am Gepäckraumbodenelement 14 das Halteelement 46 beziehungsweise ein entsprechendes Halteelement angeordnet ist.

Der Aufbau und die Funktion der Verriegelungseinrichtung 52 sind besonders gut aus Fig. 4 und 5 erkennbar. Die Verriegelungseinrichtung 52 umfasst eine Achse 54, welche um eine in Fahrzeugquerrichtung verlaufende Drehachse drehbar ist, wie in Fig. 5 durch einen Richtungspfeil 56 veranschaulicht ist. Aus Fig. 5 ist auch der mit 58 bezeichnete rechte Rasthaken erkennbar, wobei die Rasthaken 50, 58 mit der Achse 54 gekoppelt und somit mit dieser mitbewegbar sind. Über die Achse 54 sind die Rasthaken 50, 58 auch miteinander verbunden. Mit der Achse 54 ist ein Betätigungselement 60 gekoppelt, über welches die Achse 54 bewegt, das heißt gedreht werden kann. Das Betätigungselement 60 ist in einer Griffschale 61 des Griffelements 45 angeordnet. Durch Betätigen des Betätigungselements 60 sind somit die Rasthaken 50, 58 aus der jeweiligen Verriegelungsstellung in die jeweilige Freigabestellung bewegbar. Das Betätigungselement 60 ist dabei in einer Griffschale des Griffelements 45 angeordnet. Das Betätigungselement 60 ist dabei von den Rasthaken 50, 58 beabstandet angeordnet, wobei die Achse 54 eine Kopplungseinrichtung ist, über die das Betätigungselement 60 mit den Rasthaken 50, 58 (Verriegelungselemente) gekoppelt ist.

Die Verriegelungseinrichtung 52 umfasst auch wenigstens ein Federelement 62, mittels welchem die Verriegelungselemente (Rasthaken 50, 58) unter Federkraftbeaufschlagung in die Verriegelungsstellung bewegbar sind und dort gehalten werden. Hierzu ist das Federelement 62 einerseits zumindest mittelbar an den Rasthaken 50, 58 abgestützt. Andererseits ist das Federelement 62 beispielsweise zumindest mittelbar am Gepäckraumbodenelement 14 abgestützt. Diese Mechanik kann auch invers ausgelegt sein, so dass die Verriegelungselemente beispielsweise karosserieseitig angeordnet sind.

Fig. 6 zeigt die Gepäckraumbodeneinrichtung 10 ohne das erste Gepäckraumbodenelement 12 und ohne das Bodenteil 36. Wie aus Fig. 6 erkennbar ist, umfasst das zweite Gepäckraumbodenelement 14 in Fahrzeugquerrichtung verlaufende Streben 64, über die die Führungsschienen 30, 32 miteinander verbunden sind. Die Streben 64 sind beispielsweise aus einem metallischen Werkstoff, insbesondere aus Stahl, Aluminium, oder aus einem Kunststoff hergestellt. Die Streben 64 sind mit den Führungsschienen 30, 32 beispielsweise durch Verschweißen und/oder Nieten und/oder Kleben verbunden. Die Führungsschienen 30, 32 und die Streben 64 bilden eine Rahmenstruktur, welche dem zweiten Gepäckraumbodenelement 14 eine sehr hohe Steifigkeit verleiht.

Das Bodenteil 36 umfasst beispielsweise mehrere Deckschichten, welche im Sandwich-Verfahren aufgebracht werden beziehungsweise in Sandwich-Bauweise ausgebildet sind. Das Bodenteil 36 umfasst beispielsweise einen Kunststoffträger, welcher beispielsweise mit einem Teppich bezogen ist. Vorzugsweise ist die Verriegelungseinrichtung 52 zumindest teilweise in einem Hohlraum des Bodenteils 36 angeordnet. In dem Hohlraum sind insbesondere die Achse 54 und/oder das Federelement 62 sowie die Verriegelungselemente zumindest teilweise aufgenommen.

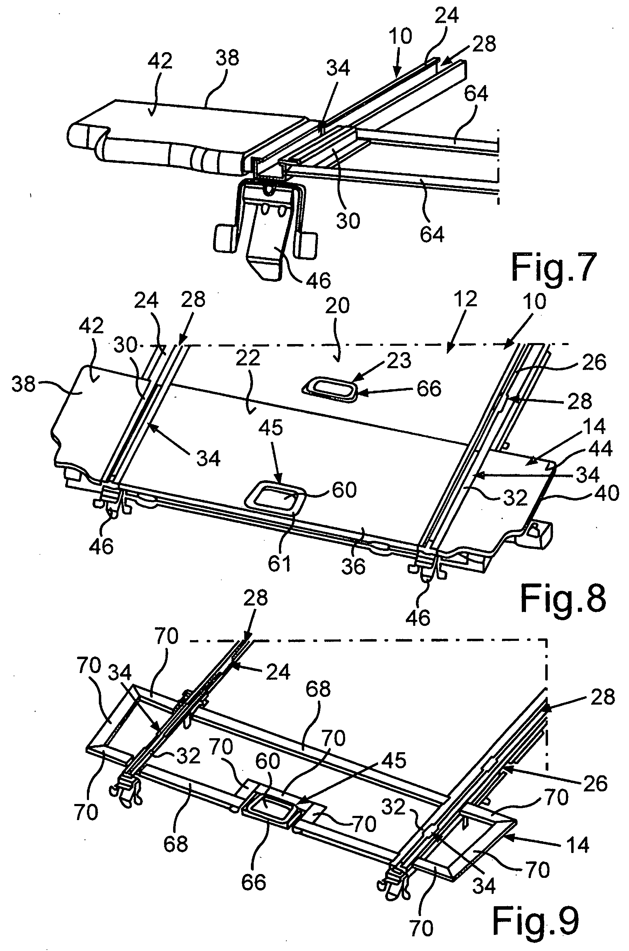

Fig. 7 zeigt die Gepäckraumbodeneinrichtung 10 in einer weiteren schematischen Perspektivansicht.

Fig. 8 bis 13 zeigen die Gepäckraumbodeneinrichtung 10 gemäß einer zweiten Ausführungsform. Wie aus Fig. 8 erkennbar ist, umfasst auch das Griffelement 23 eine Griffschale 66, welche sehr gut gegriffen werden kann. Die Bodenteile 36, 38, 40 können beispielsweise einen Grundträger in Form eines Einlegers aus Papierwaben und wenigstens einem Glasfaservlies aufweisen, welcher mit einem Teppich kaschiert ist.

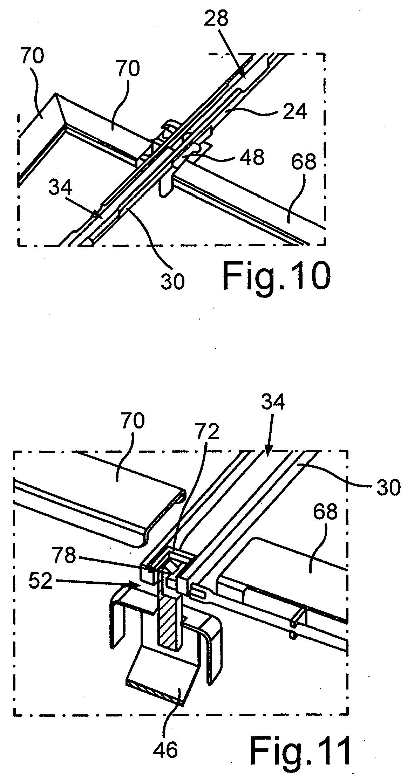

Aus Fig. 9 ist erkennbar, dass das zweite Gepäckraumbodenelement 14 eine Rahmenstruktur aus verschweißten Aluminiumprofilen 68, 70 aufweist. wobei durch die Aluminiumprofile 68 beispielsweise die Streben 64 gebildet sind. Die Rahmenstruktur ist eine stabile und steife Unterkonstruktion für die Bodenteile 36, 38, 40. Aus Fig. 10 ist erkennbar, dass das Scharnier 48 mit der Führungsschiene 30 und/oder mit der Führungsschiene 24 verschweißt ist.

Aus Fig. 11 bis 13 ist die Verriegelungseinrichtung 52 der zweiten Ausführungsform besonders gut erkennbar. Die Verriegelungseinrichtung 52 umfasst einen im Führungskanal 34 der Führungsschiene 30 angeordneten Stützblock 72, wobei als Verriegelungselement nun ein Verriegelungsstein 74 vorgesehen ist. In der Schließstellung und in der Verriegelungsstellung greift der Verriegelungsstein in eine Rastöse 78 des Halteelements 46 ein und wirkt somit formschlüssig mit dem Halteelement 46 zusammen. Der Verriegelungsstein 74 gleitet aus seiner Freigabestellung über die Rastöse 78 in die Verriegelungsstellung.

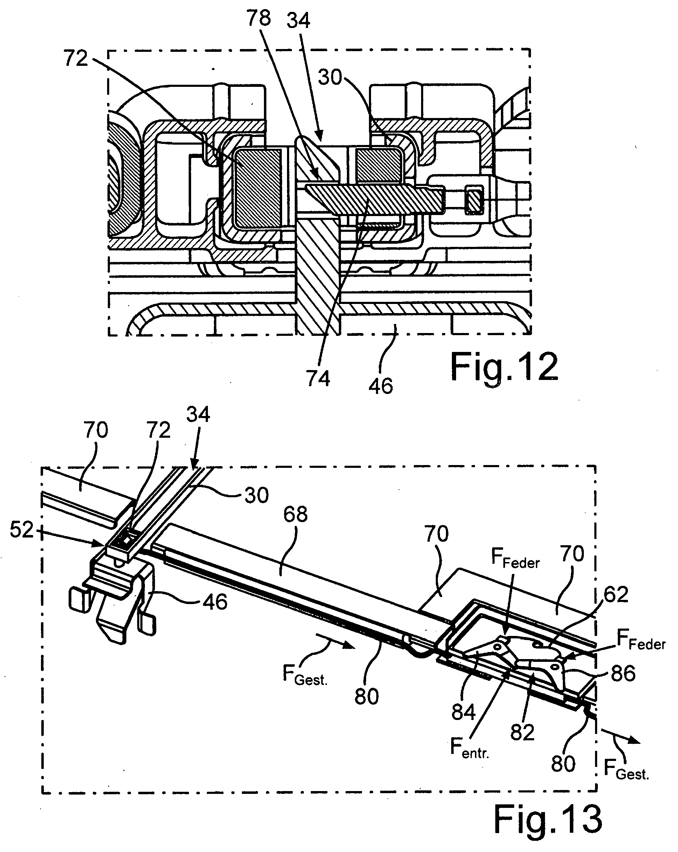

Anstelle der Achse 54 sind nun aus Fig. 13 erkennbare und translatorisch bewegbare Schubstangen 80 der Verriegelungseinrichtung 52 vorgesehen. Über die Schubstangen 80 sind die Verriegelungselemente der Verriegelungseinrichtung 52 mit dem Betätigungselement 60 gekoppelt, was anhand des Verriegelungssteins 74 im Folgenden erläutert wird. Die Schubstangen 80 sind mit einem Kniehebel 82 der Verriegelungseinrichtung 52 gekoppelt, wobei der Kniehebel 82 zwei Hebelelemente 84, 86 umfasst. Das Federelement 62 hält den Kniehebel 82 unter Vorspannung, so dass der Verriegelungsstein 74 beziehungsweise die Verriegelungselemente mittels des Federelements 62 federkraftbeaufschlagt und nach außen in die Verriegelungsstellung gedrückt und dort gehalten werden. Die durch das Federelement 62 bewirkte und auf die Hebelelemente 84, 86 wirkende Federkraft ist in Fig. 13 mit F_{Feder} bezeichnet. Aus der Federkraft F_{Feder} resultiert eine auf die Schubstangen 80 wirkende Gestängekraft F_{Gest}, welche wiederum auf die jeweiligen Verriegelungselemente wirkt und diese in der Verriegelungsstellung hält.

Zum Entriegeln der Verriegelungseinrichtung 52 wird über das Betätigungselement 60 eine Entriegelungskraft Fₑₙₜᵣ aufgebracht, so dass die Schubstangen 80 über die Hebelelemente 84, 86 in Fahrzeugquerrichtung nach innen bewegt werden. Die Verriegelungselemente bewegen sich mit den Schubstangen 80 in Fahrzeugquerrichtung nach innen mit, wodurch sie außer Wirkverbindung mit der jeweiligen Rastöse 78 bewegt werden. Dann kann das zweite Gepäckraumbodenelement 14 aus der Schließstellung in die Offenstellung bewegt werden.

### Bezugszeichenliste

- 10: Gepäckraumbodeneinrichtung
- 12: erstes Gepäckraumbodenelement
- 14: zweites Gepäckraumbodenelement
- 16: Richtungspfeil
- 18: Richtungspfeil
- 20: erste Bodenfläche
- 22: zweite Bodenfläche
- 23: Griffelement
- 24: Führungsschiene
- 26: Führungsschiene
- 28: Führungskanal
- 30: Führungsschiene
- 32: Führungsschiene
- 34: Führungskanal
- 36: Bodenteil
- 38: Bodenteil
- 40: Bodenteil
- 42: Bodenfläche
- 44: Bodenfläche
- 45: Griffelement
- 46: Halteelement
- 48: Scharnier
- 50: Rasthaken
- 52: Verriegelungseinrichtung
- 54: Achse
- 56: Richtungspfeil
- 58: Rasthaken
- 60: Betätigungselement
- 61: Griffschale
- 62: Federelement
- 64: Strebe
- 66: Griffschale
- 68: Aluminiumprofil
- 70: Aluminiumprofil
- 72: Stützblock
- 74: Verriegelungsstein
- 78: Rastöse
- 80: Schubstange
- 82: Kniehebel
- 84: Hebelelement
- 86: Hebelelement
- F_{Feder}: Federkraft
- F_{Gest.}: Gestängekraft
- F_{entr.}: Entriegelungskraft

## Patentansprüche

1. Personenkraftwagen mit einem Gepäckraum und einer Gepäckraumbodeneinrichtung (10), mit wenigstens einem ersten Gepäckraumbodenelement (12), auf dessen erster Bodenfläche (20) im Gepäckraum zu transportierende Gegenstände anordenbar sind, mit zwei in Fahrzeugquerrichtung beiderseits der ersten Bodenfläche (20) angeordneten Führungsschienen (24, 26) zum Führen und Befestigen wenigstens eines Fixierungselements zum Fixieren der zu transportierenden Gegenstände und mit einem in Fahrzeuglängsrichtung hinter dem ersten Gepäckraumbodenelement (12) angeordneten zweiten Gepäckraumbodenelement (14), auf dessen zweiter Bodenfläche (22) die zu transportierenden Gegenstände anordenbar sind, wobei das zweite Gepäckraumbodenelement (14) zwischen einer zumindest einen Teilbereich eines unter dem zweiten Gepäckraumbodenelement (14) angeordneten Stauraums überdeckenden Schließstellung und wenigstens einer den Teilbereich freigebenden Offenstellung relativ zu dem ersten Gepäckraumbodenelement (12) bewegbar ist,
**dadurch gekennzeichnet, dass**
mit dem zweiten Gepäckraumbodenelement (14) zwei weitere mit dem zweiten Gepäckraumbodenelement (14) mitbewegbare und bezogen auf die Schließstellung in Fahrzeugquerrichtung beiderseits der zweiten Bodenfläche (22) angeordnete Führungsschienen (30, 32) zum Führen und Befestigen des Fixierungselements verbunden sind, welche sich bezogen auf die Schließstellung in Längserstreckungsrichtung der ersten Führungsschienen (24, 26) an diese anschließen.

2. Personenkraftwagen nach Anspruch 1,
**dadurch gekennzeichnet, dass**
das zweite Gepäckraumbodenelement (14) zumindest mittelbar am Aufbau des Personenkraftwagens zwischen der Schließstellung und der Offenstellung relativ zum Aufbau verschwenkbar gehalten ist.

3. Personenkraftwagen nach einem der Ansprüche 1 oder 2,
**dadurch gekennzeichnet, dass**
die ersten Führungsschienen (24, 26) am Aufbau des Personenkraftwagens festgelegt sind.

4. Personenkraftwagen nach den Ansprüchen 2 und 3,
**dadurch gekennzeichnet, dass**
das zweite Gepäckraumbodenelement (14) über wenigstens ein Scharnier (48) an zumindest einer der ersten Führungsschienen (24, 26) und über diese am Aufbau zwischen der Schließstellung und der Offenstellung relativ zum Aufbau verschwenkbar gehalten ist.

5. Personenkraftwagen nach einem der vorhergehenden Ansprüche,
**dadurch gekennzeichnet, dass**
mit dem zweiten Gepäckraumbodenelement (14) eine Verriegelungseinrichtung (52) mit wenigstens einem Verriegelungselement (50) verbunden ist, welches relativ zum zweiten Gepäckraumbodenelement (14) zwischen einer das zweite Gepäckraumbodenelement (14) in der Schließstellung haltenden Verriegelungsstellung und wenigstens einer das zweite Gepäckraumbodenelement (14) freigebenden Freigabestellung bewegbar ist.

6. Personenkraftwagen nach Anspruch 5,
**dadurch gekennzeichnet, dass**
das Verriegelungselement (50) in der Verriegelungsstellung und in der Schließstellung des zweiten Gepäckraumbodenelements (14) mit einem korrespondierenden, am Aufbau des Personenkraftwagens festgelegten Halteelement (46) zum Halten des zweiten Gepäckraumbodenelements (14) in der Schließstellung zusammenwirkt.

7. Personenkraftwagen nach einem der Ansprüche 5 oder 6,
**dadurch gekennzeichnet, dass**
am zweiten Gepäckraumbodenelement (14) ein vom Verriegelungselement (50) beabstandet angeordnetes Betätigungselement (60) zum Bewegen des Verriegelungselements (50) aus der Verriegelungsstellung in die Freigabestellung vorgesehen ist, wobei das Betätigungselement (60) über eine Kopplungseinrichtung (54) mit dem Verriegelungselement (50) gekoppelt ist.

8. Personenkraftwagen nach einem der Ansprüche 5 bis 7,
**dadurch gekennzeichnet, dass**
die Verriegelungseinrichtung (52) wenigstens ein Federelement (62) umfasst, mittels welchem das Verriegelungselement (50) unter Federkraftbeaufschlagung in die Verriegelungsstellung bewegbar und dort zu halten ist.

## Claims

1. A passenger car with a luggage compartment and a luggage compartment base device (10) comprising at least one first luggage compartment base element (12), on the first base surface (20) of which items to be transported in the luggage compartment can be arranged, comprising two guide rails (24, 26) arranged on both sides of the first base surface (20) in the transverse direction of the vehicle for guiding and fastening at least one fixing element for fixing the items to be transported and comprising a second luggage compartment base element (14) which is arranged behind the first luggage compartment base element (12) in the longitudinal direction of the vehicle and on the second base surface (22) of which the items to be transported can be arranged, the second luggage compartment base element (14) being movable relative to the first luggage compartment base element (12) between a closed position covering at least a partial region of a storage space arranged under the second luggage compartment base element (14) and at least one open position releasing the partial region,
**characterised in that**
connected to the second luggage compartment base element (14) are two further guide rails (30, 32) which are arranged on both sides of the second base surface (22) in the transverse direction of the vehicle based on the closed position and are movable together with the second luggage compartment base element (14) and are to guide and fasten the fixing element and adjoin the first guide rails (24, 26) based on the closed position in the longitudinal extent direction of said first guide rails.

2. A passenger car according to claim 1,
**characterised in that**
the second luggage compartment base element (14) is held such that it can swivel relative to the car body between the closed position and the open position at least indirectly on the body of the passenger car.

3. A passenger car according to either claim 1 or claim 2,
**characterised in that**
the first guide rails (24, 26) are fixed to the body of the passenger car.

4. A passenger car according to claims 2 and 3,
**characterised in that**
the second luggage compartment base element (14) is held such that it can swivel relative to the car body between the closed position and the open position by at least one hinge (48) on at least one of the first guide rails (24, 26) and thereby on the body.

5. A passenger car according to any one of the preceding claims,
**characterised in that**
connected to the second luggage compartment base element (14) is a locking device (52) with at least one locking element (50) which is movable relative to the second luggage compartment base element (14) between a locking position holding the second luggage compartment base element (14) in the closed position and at least one release position releasing the second luggage compartment base element (14).

6. A passenger car according to claim 5,
**characterised in that**
in the locking position and in the closed position of the second luggage compartment base element (14), the locking element (50) cooperates with a corresponding holding element (46), fixed to the body of the passenger car, for holding the second luggage compartment base element (14) in the closed position.

7. A passenger car according to either claim 5 or claim 6,
**characterised in that**
provided on the second luggage compartment base element (14) is an actuating element (60) arranged at a distance from the locking element (50), for moving the locking element (50) out of the locking position into the release position, the actuating element (60) being coupled to the locking element (50) by a coupling device (54).

8. A passenger car according to any one of claims 5 to 7,
**characterised in that**
the locking device (52) comprises at least one spring element (62) by which the locking element (50) can be moved into the locking position while being subjected to spring force and is to be held in the locking position.

## Revendications

1. Véhicule de tourisme comprenant un compartiment à bagages et un dispositif de plancher (10) de compartiment à bagages comprenant au moins un premier élément de plancher de compartiment à bagages (12) sur la première surface de plancher (20) duquel des objets à transporter peuvent être positionnés dans le compartiment à bagages, deux rails de guidage (24, 26) positionnés de part et d'autre de la première surface de plancher (20) dans la direction transversale du véhicule pour permettre de guider et de fixer au moins un élément de fixation pour fixer les objets à transporter, ainsi qu'un second élément de plancher de compartiment à bagages (14) positionné en arrière du premier élément de plancher de compartiment à bagages (12) dans la direction longitudinale du véhicule, sur la seconde surface de plancher (22) duquel les objets à transporter peuvent être positionnés, le second élément de plancher de compartiment à bagages (14) pouvant être déplacé par rapport au premier élément de plancher de compartiment à bagages (12) entre une position de fermeture recouvrant au moins une zone partielle d'un compartiment de stockage situé au-dessous du second élément de plancher de compartiment à bagages (14) et au moins une position d'ouverture libérant la zone partielle,
**caractérisé en ce qu'**
avec le second élément de plancher de compartiment à bagages (14) sont reliés deux autres rails de guidage (30, 32) permettant de guider et de fixer l'élément de fixation, déplaçables conjointement avec le second élément de compartiment à bagages (14) et positionnés de part et d'autre de la seconde surface de plancher (22) dans la direction transversale du véhicule en se référant à la position de fermeture, ces autres rails de guidage (30, 32), se connectant aux premiers rails de guidage (24, 26) dans la direction longitudinale de ces rails en se référant à la position de fermeture.

2. Véhicule de tourisme conforme à la revendication 1,
**caractérisé en ce que**
le second élément de plancher de compartiment à bagages (14) est monté au moins indirectement sur la carrosserie du véhicule en étant pivotant relativement à cette carrosserie entre la position de fermeture et la position d'ouverture.

3. Véhicule de tourisme conforme à l'une des revendications 1 et 2,
**caractérisé en ce que**
les seconds rails de guidage (24, 26) sont fixés sur la carrosserie du véhicule.

4. Véhicule de tourisme conforme aux revendications 2 et 3,
**caractérisé en ce que**
le second élément de plancher de compartiment à bagages (14) est monté pivotant par rapport à la carrosserie entre la position de fermeture et la position d'ouverture par l'intermédiaire d'au moins une charnière (48) sur au moins l'un des premiers rails de guidage (24, 26) et par l'intermédiaire de celui-ci sur la carrosserie.

5. Véhicule de tourisme conforme à l'une des revendications précédentes,
**caractérisé en ce qu'**
avec le second élément de plancher de compartiment à bagages (14) est relié un dispositif de verrouillage (52) comprenant au moins un élément de verrouillage (50) qui peut être déplacé par rapport au second élément de plancher de compartiment à bagages (14) entre une position de verrouillage dans laquelle le second élément de plancher de compartiment à bagages (14) est maintenu dans la position de fermeture et au moins une position de libération dans laquelle le second élément de plancher de compartiment à bagages (14) est libéré.

6. Véhicule de tourisme conforme à la revendication 5,
**caractérisé en ce que**
dans la position de verrouillage et dans la position de fermeture du second élément de plancher de compartiment à bagages (14), l'élément de verrouillage (50) coopère avec un élément de retenue (46) correspondant fixé sur la carrosserie du véhicule pour maintenir le second élément de plancher de compartiment à bagages (14) dans la position de fermeture.

7. Véhicule de tourisme conforme à l'une des revendications 5 et 6,
**caractérisé en ce que**
sur le second élément de plancher de compartiment à bagages (14) est prévu un élément d'actionnement (60) monté à distance de l'élément de verrouillage (50) pour permettre de déplacer l'élément de verrouillage (50) de la position de verrouillage dans la position de libération, l'élément d'actionnement (60) étant accouplé à l'élément de verrouillage (50) par l'intermédiaire d'un dispositif d'accouplement (54).

8. Véhicule de tourisme conforme à l'une des revendications 5 à 7,
**caractérisé en ce que**
le dispositif de verrouillage (52) comprend au moins un élément élastique (62) au moyen duquel l'élément de verrouillage (50) peut être déplacé dans la position de verrouillage sous l'action d'une force de rappel et y être maintenu.
